# EUROPEAN PATENT APPLICATION

(11) **EP 2 275 660 A1**
(43) Date of publication of application: **19.01.2011**
(21) Application number: 09746490.3
(22) Date of filing: 24.04.2009
(51) Int. Cl.: F02D 41/04, B60K 6/445, B60W 10/06, B60W 20/00, F01N 3/02, F01N 3/20, F01N 3/28, F02D 29/02

(54) **DEVICE AND METHOD FOR CONTROLLING VEHICLE**

(30) Priority: 15.05.2008 JP 2008128665
(71) Applicant: TOYOTA JIDOSHA KABUSHIKI KAISHA, Toyota-shi, Aichi 471-8571 (JP)
(72) Inventor: NIIMI, Kuniaki, Toyota-shi Aichi 471-8571 (JP)
(74) Representative: Intès, Didier Gérard André
(86) International application number: PCT/JP2009/058128
(87) International publication number: WO 2009/139283

(57) **Abstract**

An engine ECU executes a program including: a step (S104) of estimating the occluded amount of NOx if an engine is self-rotating (YES in S100) and a catalyst temperature is equal to or higher than a predetermined temperature Ta(0) (YES in S102); and a step (S108) of performing NOx reduction treatment if the estimated occluded amount of NOx is equal to or more than a predetermined amount (YES in S106).

## Description

### TECHNICAL FIELD

The present invention relates to a control device for a vehicle including a catalyst reducing nitrogen oxide, and in particular to a technique of performing reduction treatment by the catalyst at an appropriate time point based on a state of the vehicle.

### BACKGROUND ART

Conventionally, a hybrid vehicle having an engine and a rotating electric machine as drive sources has been known. The engine is provided with a catalyst purifying nitrogen oxide (hereinafter referred to as NOx) in exhaust gas produced by combustion. In particular, for a diesel engine, a technique of reducing and purifying NOx by supplying a reducing agent to exhaust gas and causing the reducing agent to react with NOx in the exhaust gas on a catalyst has been known. Since the engine in the hybrid vehicle is repeatedly stopped and started during traveling of the vehicle, a purifying effect by the catalyst should fully function immediately after the engine is started.

In view of such a problem, Japanese Patent Laying-Open No. 6-178401 (Patent Document 1) discloses a hybrid vehicle warming up a catalytic converter without reducing energy efficiency. The hybrid vehicle, which includes a traveling motor, a battery supplying electric power to the motor, a power generator charging a battery, an engine rotating and driving the power generator, means for detecting an amount of charge in the battery, and means for starting the engine if the amount of charge in the battery becomes lower than a prescribed amount, is characterized by providing an exhaust path of the engine with a catalytic converter for purifying exhaust gas, providing the catalytic converter with an electrothermal heater heating a catalyst, providing the motor with a regenerative power generation mechanism recharging the battery during deceleration of the vehicle, and including means for supplying a regenerative current of the regenerative power generation mechanism to the electrothermal heater if the engine is in a stopped state and the amount of charge in the battery becomes not more than a predetermined value.

According to the hybrid vehicle disclosed in the publication described above, the catalyst is activated before the engine is started, and the exhaust gas can be purified efficiently immediately after the engine is started.

### PRIOR ART DOCUMENTS

### PATENT DOCUMENTS

Patent Document 1: Japanese Patent Laying-Open No. 6-178401

### SUMMARY OF THE INVENTION

### PROBLEMS TO BE SOLVED BY THE INVENTION

However, in a case where a reducing agent is supplied in accordance with changes in a flow rate of exhaust gas flowing through a catalyst, the reducing agent should be supplied in a large amount to reduce an oxygen concentration in the exhaust gas to zero. Accordingly, when for example fuel is used as a reducing agent, there arises a problem that fuel efficiency is deteriorated. Further, when the exhaust gas has a high flow speed, the added reducing agent also passes through the catalyst at a faster speed, and thus there is a possibility that the purifying effect does not fully function. Furthermore, when the exhaust gas has a low flow speed, such as during deceleration of the vehicle and the like, the exhaust gas has a low temperature, and thus there is a possibility that reduction treatment cannot be performed.

The publication described above merely discloses activating a catalyst by warming up a catalytic converter, and cannot solve such a problem.

One object of the present invention is to provide a control device and a control method for a vehicle that improve exhaust gas purification performance by performing reduction treatment of nitrogen oxide at a time point when an effect of purifying exhaust gas appropriately functions in an internal combustion engine.

### MEANS FOR SOLVING THE PROBLEMS

A control device for a vehicle in accordance with an aspect of the present invention is a control device for a vehicle having an internal combustion engine and a rotating electric machine as drive sources. The internal combustion engine includes an exhaust path through which exhaust gas produced by combusting fuel flows, and a catalyst provided at a midpoint in the exhaust path for occluding nitrogen oxide. The control device includes: a temperature detection unit detecting a temperature of the catalyst; a rotation speed detection unit detecting a rotation speed of the internal combustion engine; a load detection unit detecting a load of the internal combustion engine; and a reduction treatment unit performing reduction treatment of the nitrogen oxide in the catalyst if a first condition that the detected rotation speed and load are a rotation speed and a load within a self-rotation speed region of the internal combustion engine, and a second condition that the detected temperature of the catalyst is equal to or higher than a predetermined temperature at which the nitrogen oxide occluded by the catalyst can be reduced are satisfied.

According to the present invention, if the catalyst is in an activated state having a temperature that is equal to or higher than the predetermined temperature at which the nitrogen oxide occluded by the catalyst can be reduced, and the rotation speed and the load of the internal combustion engine are a rotation speed and a load within the self-rotation speed region of the internal combustion engine, the catalyst has a reducing atmosphere, and the flowing exhaust gas has a flow rate appropriate for reducing the nitrogen oxide. Therefore, a large amount of nitrogen oxide can be purified by performing the reduction treatment of the nitrogen oxide. Consequently, a control device and a control method for a vehicle that improve exhaust gas purification performance by performing reduction treatment of nitrogen oxide at a time point when an effect of purifying exhaust gas appropriately functions in an internal combustion engine can be provided.

Preferably, the control device further includes a first internal combustion engine control unit controlling the internal combustion engine, if the second condition is not satisfied, to increase an output of the internal combustion engine or increase a temperature of the exhaust gas such that the temperature of the catalyst becomes equal to or higher than the predetermined temperature.

According to the present invention, the catalyst can have a reducing atmosphere by increasing the output of the internal combustion engine or increasing the temperature of the exhaust gas such that the catalyst temperature becomes equal to or higher than the predetermined temperature. By performing the reduction treatment in such a state, a large amount of nitrogen oxide can be purified.

More preferably, the internal combustion engine further includes a catalyst heating device increasing the temperature of the catalyst. The control device further includes a heating control unit controlling the catalyst heating device, if the second condition is not satisfied, such that the temperature of the catalyst becomes equal to or higher than the predetermined temperature.

According to the present invention, if the catalyst temperature is lower than the predetermined temperature, the catalyst can have a reducing atmosphere by increasing the catalyst temperature using the catalyst heating device. By performing the reduction treatment in such a state, a large amount of nitrogen oxide can be purified.

More preferably, the catalyst has a filter trapping fine particles in the exhaust gas. The control device further includes: a clogging detection unit detecting a degree of clogging of the filter; a decision unit deciding a rotation speed and a load of the internal combustion engine at which the exhaust gas has a flow rate suitable for purifying the nitrogen oxide, in accordance with the detected degree of clogging; and an internal combustion engine control unit controlling the internal combustion engine based on the decided rotation speed and load.

According to the present invention, the exhaust gas can have a flow rate suitable for purifying the nitrogen oxide by controlling the internal combustion engine to achieve the rotation speed and the load of the internal combustion engine decided in accordance with the degree of clogging of the filter. By performing the reduction treatment when the catalyst has a reducing atmosphere, a large amount of nitrogen oxide can be purified.

More preferably, the control device further includes an occluded amount detection unit detecting an occluded amount of the nitrogen oxide occluded by the catalyst. The reduction treatment unit performs the reduction treatment of the nitrogen oxide in the catalyst if a third condition that the detected occluded amount of the nitrogen oxide is equal to or more than a predetermined amount, in addition to the first condition and the second condition, are satisfied.

According to the present invention, by performing the reduction treatment if the occluded amount of the nitrogen oxide occluded by the catalyst is high, a large amount of occluded nitrogen oxide can be purified.

More preferably, stopping of the internal combustion engine is suppressed if a speed of the vehicle is equal to or higher than a predetermined speed.

According to the present invention, when stopping of the internal combustion engine is suppressed if the speed of the vehicle is equal to or higher than the predetermined speed, the internal combustion engine is in a state of self-rotation if the vehicle does not require a drive force. Therefore, by performing the reduction treatment when the catalyst has a reducing atmosphere, a large amount of nitrogen oxide can be purified.

More preferably, the internal combustion engine is any of a lean burn gasoline engine and a diesel engine.

According to the present invention, by applying the present invention to a lean burn gasoline engine or a diesel engine, a large amount of nitrogen oxide can be purified.

More preferably, the rotating electric machine is a first rotating electric machine. The vehicle includes a second rotating electric machine generating electric power based on motive power of the internal combustion engine, and a motive power split mechanism transmitting motive power of at least one of the internal combustion engine and the first rotating electric machine to an axle of the vehicle. The motive power split mechanism outputs the input motive power of the internal combustion engine or motive power of the first rotating electric machine after splitting the input motive power into a drive force to the axle or motive power to the second rotating electric machine.

According to the present invention, by applying the present invention to an engine mounted in a hybrid vehicle, a large amount of nitrogen oxide can be purified efficiently. In particular, unlike a vehicle having an engine only as a drive source, a hybrid vehicle of such a type may travel in a high vehicle speed region with an engine being in the state of self-rotation. In such a case, the engine has operation history such that the vehicle was in an accelerated state before entering the high vehicle speed region, or the engine was in a high-load steady state. Therefore, the catalyst temperature is high and further the amount of air during self-rotation is small, and thus a reducing atmosphere can be formed with a small amount of a reducing agent. That is, the reduction treatment of the nitrogen oxide can be performed at a time point when an effect of purifying the exhaust gas appropriately functions in the engine.

### DESCRIPTION OF THE DRAWINGS

Fig. 1 is a control block diagram showing a configuration of a hybrid vehicle in a first embodiment.
Fig. 2 is a functional block diagram of an engine ECU as a control device for the vehicle in accordance with the first embodiment.
Fig. 3 is a flowchart illustrating a control structure of a program executed in the engine ECU as the control device for the vehicle in accordance with the first embodiment.
Fig. 4 is a timing chart illustrating an operation of the engine ECU as the control device for the vehicle in accordance with the first embodiment.
Fig. 5 is a control block diagram showing a configuration of a hybrid vehicle in a second embodiment.
Fig. 6 is a control block diagram showing a portion of the configuration of the hybrid vehicle in the second embodiment.
Fig. 7 is a functional block diagram of an engine ECU as a control device for the vehicle in accordance with the second embodiment.
Fig. 8 is a flowchart illustrating a control structure of a program executed in the engine ECU as the control device for the vehicle in accordance with the second embodiment.
Fig. 9 is a control block diagram showing a configuration of a hybrid vehicle in a third embodiment.
Fig. 10 is a functional block diagram of an engine ECU as a control device for the vehicle in accordance with the third embodiment.
Fig. 11 is a flowchart illustrating a control structure of a program executed in the engine ECU as the control device for the vehicle in accordance with the third embodiment.

### MODES FOR CARRYING OUT THE INVENTION

Hereinafter, embodiments of the present invention will be described with reference to the drawings. In the description below, identical parts will be designated by the same reference numerals. Since their names and functions are also the same, the detailed description thereof will not be repeated.

### <First Embodiment>

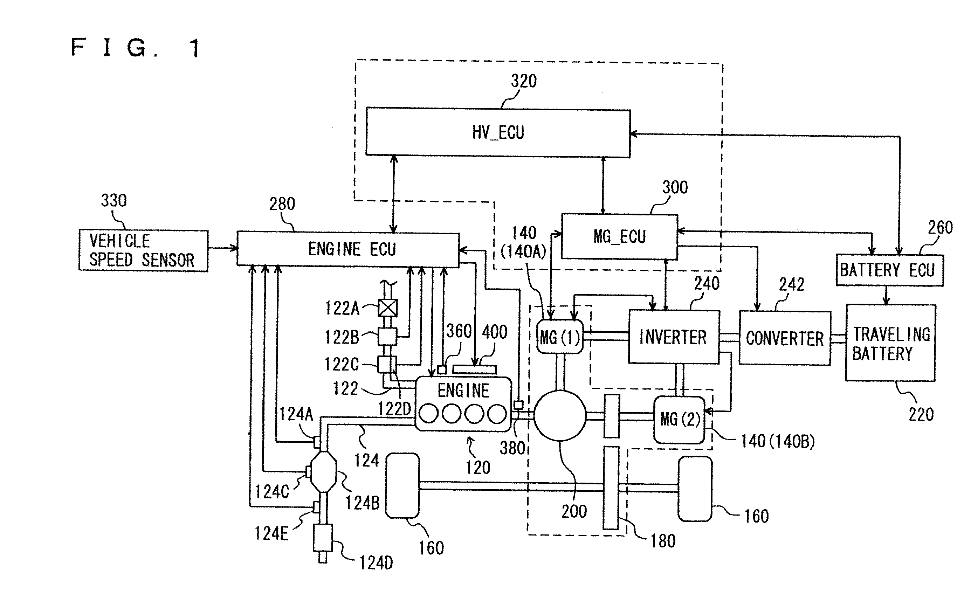

Referring to Fig. 1, a control block diagram of a hybrid vehicle equipped with a control device for a vehicle in accordance with an embodiment of the present invention will be described.

The hybrid vehicle includes, as drive sources, an internal combustion engine (hereinafter referred to as an engine) 120, and a motor generator (MG) 140 serving as a rotating electric machine. Although motor generator 140 is expressed as a generator 140A and a motor 140B in Fig. 1 for convenience in description, generator 140A functions as a motor and motor 140B functions as a generator depending on a traveling state of the hybrid vehicle.

Although engine 120 will be described as a lean burn gasoline engine in the present embodiment, engine 120 may be a diesel engine.

An intake path 122 of engine 120 is provided with an air cleaner 122A trapping dust in intake air, an air flow meter 122B detecting an amount of air passing through air cleaner 122A to be taken into engine 120, and an electronic throttle 122C having a throttle valve for adjusting the amount of air to be taken into engine 120. Electronic throttle 122C is provided with a throttle position sensor 122D. The amount of intake air detected by air flow meter 122B, an opening degree of electronic throttle 122C detected by throttle position sensor 122D, and the like are input to an engine ECU (Electronic Control Unit) 280.

Engine 120 is provided with a plurality of cylinders and a fuel injection device 130 injecting fuel to each of the plurality of cylinders. Fuel injection device 130 injects an appropriate amount of fuel to each cylinder at an appropriate time based on a fuel injection control signal from engine ECU 280.

Further, an exhaust path 124 of engine 120 is provided with a three-way catalytic converter 124B, an air-fuel ratio sensor 124A detecting an air-fuel ratio (A/F) in exhaust gas to be introduced into three-way catalytic converter 124B, a catalyst temperature sensor 124C detecting a temperature of three-way catalytic converter 124B, a silencer 124D, and an oxygen sensor 124E detecting an oxygen concentration in the exhaust gas exhausted from three-way catalytic converter 124B.

Although three-way catalytic converter 124B will be described in the present embodiment to occlude nitrogen oxide (hereinafter also referred to as NOx) in the exhaust gas and reduce the occluded Nor while oxidizing hydrocarbon and carbon monoxide in the exhaust gas, a catalyst at least occluding and reducing NOx may be used.

Signals indicating the air-fuel ratio of the exhaust gas to be introduced into three-way catalytic converter 124B detected by air-fuel ratio sensor 124A, the temperature of three-way catalytic converter 124B detected by catalyst temperature sensor 124C, the oxygen concentration of the exhaust gas exhausted from three-way catalytic converter 124B detected by oxygen sensor 124E, and the like are input to engine ECU 280.

Air-fuel ratio sensor 124A is an all-range air-fuel ratio sensor (linear air-fuel ratio sensor) that generates an output voltage proportional to an air-fuel ratio of an air-fuel mixture burned in engine 120. In the present embodiment, air-fuel ratio sensor 124A has a detection element, and outputs a signal corresponding to an air-fuel ratio of engine 120 by contact of the exhaust gas from engine 120 with the detection element.

Oxygen sensor 124E detects in an on-off manner whether the air-fuel ratio of the air-fuel mixture burned in engine 120 is rich or lean with respect to a theoretical air-fuel ratio. Oxygen sensor 124E outputs a signal indicating whether the air-fuel ratio of the air-fuel mixture burned in engine 120 is rich or lean with respect to the theoretical air-fuel ratio.

It is to be noted that an oxygen sensor may be used instead of air-fuel ratio sensor 124A, and an air-fuel ratio sensor may be used instead of oxygen sensor 124E.

Further, a signal indicating a temperature of engine cooling water is input to engine ECU 280 from a water temperature detection sensor 360 detecting the temperature of cooling water for engine 120. An output shaft of engine 120 is provided with a crank position sensor 380, and a signal indicating a rotation speed of the output shaft is input to engine ECU 280 from crank position sensor 380.

The hybrid vehicle further includes a reduction gear 180 transmitting motive power generated in engine 120 and motor generator 140 to drive wheels 160 or transmitting drive of drive wheels 160 to engine 120 and motor generator 140, a motive powder split mechanism (for example, a planetary gear mechanism) 200 distributing motive power generated by engine 120 to two routes, namely, to drive wheels 160 and to generator 140A, a traveling battery 220 charged with electric power for driving motor generator 140, an inverter 240 performing current control while concerting between a direct current of traveling battery 220 and alternating currents of generator 140A and motor 140B, a battery control unit (hereinafter referred to as a battery ECU) 260 managing and controlling a charge/discharge state of traveling battery 220, engine ECU 280 controlling an operation state of engine 120, an MG_ECU 300 controlling motor generator 140, battery ECU 260, inverter 240, and the like in accordance with a state of the hybrid vehicle, and an HV_ECU 320 mutually managing and controlling battery ECU 260, engine ECU 280, MG_ECU 300, and the like to control an entire hybrid system such that the hybrid vehicle can travel most efficiently. Instead of the traveling battery, a capacitor or the like may be used as a power storage device.

In the present embodiment, a converter 242 is provided between traveling battery 220 and inverter 240. Since the rated voltage of traveling battery 220 is lower than the rated voltages of generator 140A and motor 140B, when electric power is supplied from traveling battery 220 to generator 140A and motor 140B, the electric power is boosted in converter 242. Converter 242 has a built-in smoothing capacitor. When converter 242 performs boost operation, electric charge is stored in the smoothing capacitor.

Although the ECUs are configured separately in Fig. 1, two or more ECUs may be configured as an integrated ECU (for example, MG_ECU 300 and HV_ECU 320 may be configured as an integrated ECU as indicated by a dotted line in Fig. 1).

A driver's seat is provided with an accelerator pedal (not shown), and an accelerator position sensor (not shown) detects an amount of depression of the accelerator pedal. The accelerator position sensor outputs a signal indicating the amount of depression of the accelerator pedal to HV_ECU 320. HV_ECU 320 controls an output or a power generation amount of engine 120 via generator 140A, motor 140B, and engine ECU 280 in accordance with a required drive force corresponding to the amount of depression.

A vehicle speed sensor 330 is a sensor detecting a physical quantity related to a speed of the vehicle. The "physical quantity related to the speed of the vehicle" may be, for example, a rotation speed of an axle or a rotation speed of an output shaft of a transmission. Vehicle speed sensor 330 sends a signal indicating the detected physical quantity to engine ECU, 280.

As motive power split mechanism 200, a planetary gear mechanism (planetary gear) is used to distribute the motive power of engine 120 to both drive wheels 160 and generator, 140A. By controlling a rotation speed of generator 140A, motive power split mechanism 200 also functions as a continuously variable transmission.

In the hybrid vehicle equipped with a hybrid system as shown in Fig. 1, when engine 120 is operated with low efficiency, for example, at startup or during low-speed traveling, the hybrid vehicle travels using only motor 140B of motor generator 140. During normal traveling, for example, the motive power of engine 120 is split to two routes by motive power split mechanism 200, and one of the split motive powers is used to drive drive wheels 160 directly, and the other is used to drive generator 140A and generate electric power. On this occasion, the generated electric power is used to drive motor 140B, thereby providing assistance in driving drive wheels 160. During highspeed traveling, the electric power from traveling battery 220 is further supplied to motor 140B to increase the output of motor 140B, thereby adding a drive force to drive wheels 160.

On the other hand, during deceleration, motor 140B, which is driven by drive wheels 160, functions as a generator to perform regenerative power generation, and collected electric power is stored in traveling battery 220. In a case where an amount of charge in traveling battery 220 is decreased and charging is required in particular, the output of engine 120 is increased to increase the power generation amount by generator 140A and increase the amount of charge in traveling battery 220. As a matter of course, control for increasing a drive force of engine 120 may be performed if necessary, even during low-speed traveling. This control is performed for example when traveling battery 220 needs to be charged as described above, when an auxiliary machine such as an air-conditioner is driven, or when the temperature of the cooling water for engine 120 is raised to a prescribed temperature.

Furthermore, in the hybrid vehicle equipped with the hybrid system as shown in Fig. 1, engine 120 is stopped to improve fuel efficiency, depending on the operation state of the vehicle and the state of traveling battery 220. The operation state of the vehicle and the state of traveling battery 220 are also detected thereafter, and engine 120 is restarted. In this manner, engine 120 is intermittently operated. This is a difference from a conventional vehicle (i.e., a vehicle equipped with an engine only) in which, when an ignition switch is turned to a START position to start the engine, the engine is not stopped until the ignition switch is turned from an ON position to an ACC position or an OFF position. In the hybrid vehicle of the present embodiment, stopping of engine, 120 is suppressed if the speed of the vehicle is equal to or higher than a predetermined speed V(0).

In the vehicle having a configuration as described above, NOx is purified by performing reduction treatment on NOx occluded in three-way catalytic converter 124B during operation of engine 120. The reduction treatment is performed, for example, by increasing a fuel injection amount such that the air-fuel ratio of engine 120 is temporarily on a rich side with respect to the theoretical air-fuel ratio, and using the fuel as a reducing agent and causing the reducing agent to react with NOx in three-way catalytic converter 124B. In the case of a diesel engine, the reduction treatment is performed by directly adding a reducing agent such as the fuel or an aqueous urea solution to the exhaust path, and causing the reducing agent to react with NOx in three-way catalytic converter 124B.

However, in the case where the reducing agent is supplied to three-way catalytic converter 124B by setting the air-fuel ratio to be on a rich side with respect to the theoretical air-fuel ratio irrespective of changes in a flow rate of the exhaust gas flowing through three-way catalytic converter 124B, or by directly adding a reducing agent such as the fuel or an aqueous urea solution to the exhaust path, the reducing agent should be supplied in a large amount to reduce the oxygen concentration in the exhaust gas to zero. Accordingly, when for example the fuel is used as a reducing agent, fuel efficiency may be deteriorated. This is because, when the exhaust gas has a high flow speed, the added reducing agent also passes through the catalyst at a faster speed, and thus there is a possibility that a purifying effect does not fully function. Further, during deceleration of the vehicle and the like, the exhaust gas has a low flow speed and a low temperature, and thus there is a possibility that reduction treatment cannot be performed.

Therefore, the present invention is **characterized in that** reduction treatment of NOx in three-way catalytic converter 124B is performed by engine ECU 280 if a condition (1) that a rotation speed and a load of engine 120 are a rotation speed and a load within a rotation speed region in which engine 120 continues operating without transmitting the motive power to the drive wheels, and a condition (2) that the temperature of three-way catalytic converter 124B is equal to or higher than a predetermined temperature are satisfied.

It is to be noted that, in the present embodiment, engine ECU, 280 detects an occluded amount of NOx in three-way catalytic converter 124B, and performs reduction treatment of NOx in three-way catalytic converter 124B if a condition (3) that the detected occluded amount of NOx is equal to or more than a predetermined amount, in addition to the condition (1) and the condition (2) described above, are satisfied. If the conditions (1) to (3) described above are all satisfied, engine ECU 280 performs reduction treatment of NOx by controlling fuel injection device 130 such that the air-fuel ratio is temporarily on a rich side with respect to the theoretical air-fuel ratio.

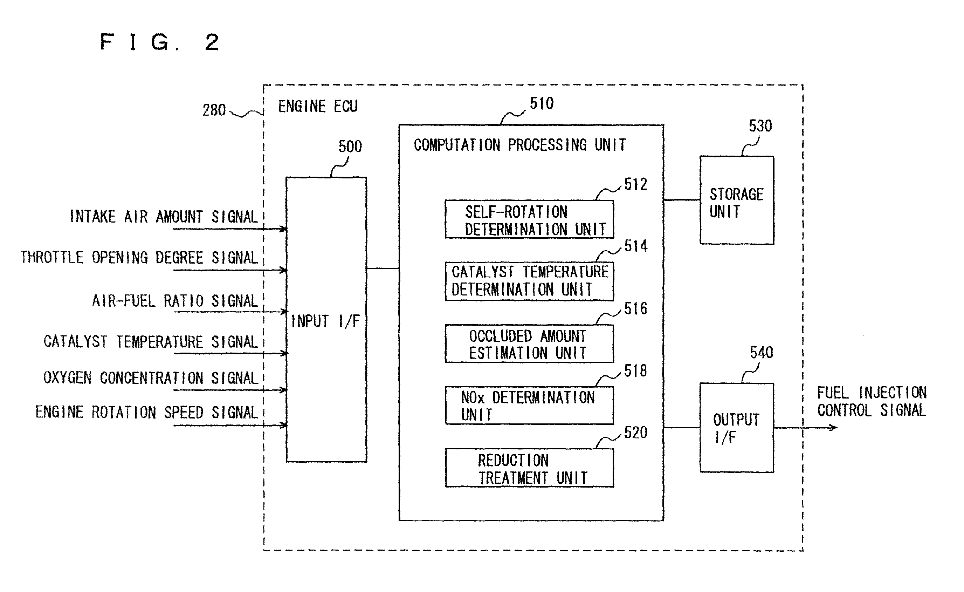

Fig. 2 shows a functional block diagram of engine ECU 280 as the control device for the vehicle in accordance with the present embodiment.

Engine ECU, 280 includes an input interface (hereinafter referred to as an input I/F) 500, a computation processing unit 510, a storage unit 530, and an output interface (hereinafter referred to as an output I/F) 540.

Input I/F 500 receives an intake air amount signal from air flow meter 122B, a throttle opening degree signal from throttle position sensor 122D, an air-fuel ratio signal from air-fuel ratio sensor 124A, a catalyst temperature signal from catalyst temperature sensor 124C, an oxygen concentration signal from oxygen sensor 124E, and an engine rotation speed signal from crank position sensor 380, and sends the signals to computation processing unit 510.

Computation processing unit 510 includes a self-rotation determination unit 512, a temperature determination unit 514, an occluded amount estimation unit 516, an NOx determination unit 518, and a reduction treatment unit 520.

Self-rotation determination unit 512 determines whether or not engine 120 is self-rotating. Specifically, self-rotation determination unit 512 determines whether or not the rotation speed of engine 120 based on the engine rotation speed signal and the load of engine 120 based on the intake air amount signal and/or the throttle opening degree signal are a rotation speed and a load within a self-rotation speed region of engine 120. The self-rotation speed region of engine 120 refers to a state where engine 120 continues operating without performing work.

Engine 120 is controlled to operate along an operation line set beforehand on a plane of coordinates with axes representing a rotation speed and a torque. Therefore, for example, a rotation speed region and a load region in a range of not more than a rotation speed at which a predetermined torque is obtained and not less than a lower limit value of a rotation speed at which engine 120 is not stopped may be set as the self-rotation speed region of engine 120. Alternatively, the self-rotation speed region of engine 120 may be set by adapting a rotation speed region and a load region at which the exhaust gas has a flow rate suitable for purifying NOx through experiments and the like.

Further, the self-rotation speed region of engine 120 may be a rotation speed region and a load region that are constant irrespective of the state of engine 120, or may be a rotation speed region and a load region that are changed in accordance with the state of engine 120 (for example, the temperature of the cooling water, the temperature of the intake air, or the like).

As described above, stopping of engine 120 is suppressed if the vehicle has a speed that is equal to or higher than the predetermined speed V(0). On this occasion, if the vehicle does not require a drive force, engine 120 is in a state of self-rotation. Specifically, engine 120 is in a state where it operates at a rotation speed and a load at which at least the output shaft (a crank shaft) can be kept rotating.

Self-rotation determination unit 512 may, for example, turn on a self-rotation determination flag if the rotation speed of engine 120 is a rotation speed within a predetermined rotation speed region and a load region thereof is a load within a predetermined load region.

Temperature determination unit 514 determines whether or not the temperature of three-way catalytic converter 124B is equal to or higher than a predetermined temperature Ta(0) based on the catalyst temperature signal. The predetermined temperature Ta(0) is a lower limit value of a temperature at which an appropriate amount of NOx can be reduced in three-way catalytic converter 124B, and is adapted through experiments and the like. Temperature determination unit 514 may, for example, turn on a temperature determination flag if the temperature of three-way catalytic converter 124B is equal to or higher than the predetermined temperature Ta(0).

It is described in the present embodiment that temperature determination unit 514 determines whether or not the temperature of three-way catalytic converter 124B is equal to or higher than the predetermined temperature Ta(0) based on the temperature of three-way catalytic converter 124B detected by catalyst temperature sensor 124C. However, temperature determination unlit 514 may estimate the temperature of three-way catalytic converter 124B based on the rotation speed of engine 120, history of the intake air amount, a map, and the like, and determine whether or not the estimated temperature is equal to or higher than the predetermined temperature Ta(0). The map is a map indicating relationship between changes in the temperature of three-way catalytic converter 124B and changes in the rotation speed and the intake air amount.

Occluded amount estimation unlit 516 estimates the occluded amount of NOx in three-way catalytic converter 124B. Specifically, occluded amount estimation unit 516 estimates the occluded amount of NOx in three-way catalytic converter 124B based on the rotation speed of engine 120 and the history of the intake air amount (load).

NOx determination unit 518 determines whether or not the estimated occluded amount of NOx is equal to or more than a predetermined amount. The predetermined amount is an occluded amount of NOx for which it is desirable to start reduction treatment, and is adapted through experiments and the like. NOx determination unit 518 may turn on an NOx determination flag if the estimated occluded amount of NOx is equal to or more than the predetermined amount.

Reduction treatment unit 520 performs NOx reduction treatment if the condition (1) that the rotation speed and the load of engine 120 are a rotation speed within a predetermined rotation speed region and a load within a predetermined load region, the condition (2) that the catalyst temperature is equal to or higher than a predetermined temperature, and the condition (3) that the estimated occluded amount of NOx is equal to or more than a predetermined amount are all satisfied. Specifically, reduction treatment unit 520 controls fuel injection device 130 such that the air-fuel ratio of engine 120 is temporarily on a rich side until a predetermined period elapses. If the conditions (1) to (3) are all satisfied, reduction treatment unit 520 generates the fuel injection control signal such that the air-fuel ratio is temporarily on a rich side, and sends the signal to fuel injection device 130 via output I/F 540.

Reduction treatment unit 520 may perform NOx reduction treatment if the self-rotation determination flag, the temperature determination flag, and the NOx determination flag are all on.

Although the present embodiment describes a case where all of self-rotation determination unit 512, temperature determination unit 514, occluded amount estimation unit 516, NOx determination unit 518, and reduction treatment unit 520 function as software implemented by an CPU (Central Processing Unit) as computation processing unit 510 executing a program stored in storage unit 530, they may be configured to be implemented by hardware. Such a program is recorded in a storage medium and mounted in the vehicle.

Storage unit 530 stares various types of information, programs, threshold values, maps, and the like, and data is read from computation processing unit 510, or stored therein, as necessary.

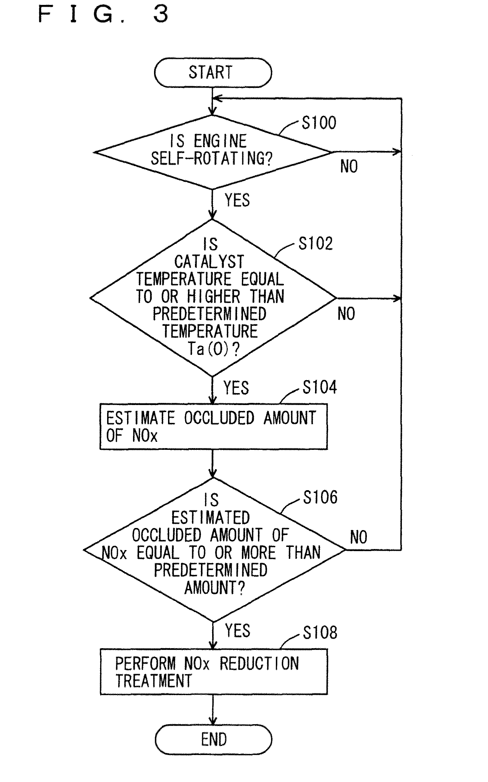

Hereinafter, a control structure of a program executed in engine ECU 280 as the control device for the vehicle in accordance with the present embodiment will be described with reference to Fig. 3.

In step (hereinafter referred to as S) 100, engine ECU, 280 determines whether or not engine 120 is self-rotating. If engine 120 is self-rotating (YES in S100), the process goes to S102. Otherwise (NO in S100), the process returns to S 100.

In S 102, engine ECU 280 determines whether or not the catalyst temperature is equal to or higher than a predetermined temperature Ta(0). If the catalyst temperature is equal to or higher than the predetermined temperature Ta(0) (YES in S102), the process goes to S104. Otherwise (NO in S102), the process returns to S 100.

In S 104, engine ECU 280 estimates an occluded amount of NOx. In S 106, engine ECU 280 determines whether or not the estimated occluded amount of NOx is equal to or more than a predetermined amount. If the estimated occluded amount of NOx is equal to or more than the predetermined amount (YES in S106), the process goes to S108. Otherwise (NO in S 106), the process returns to S 100. In S108, engine ECU 280 performs NOx reduction treatment.

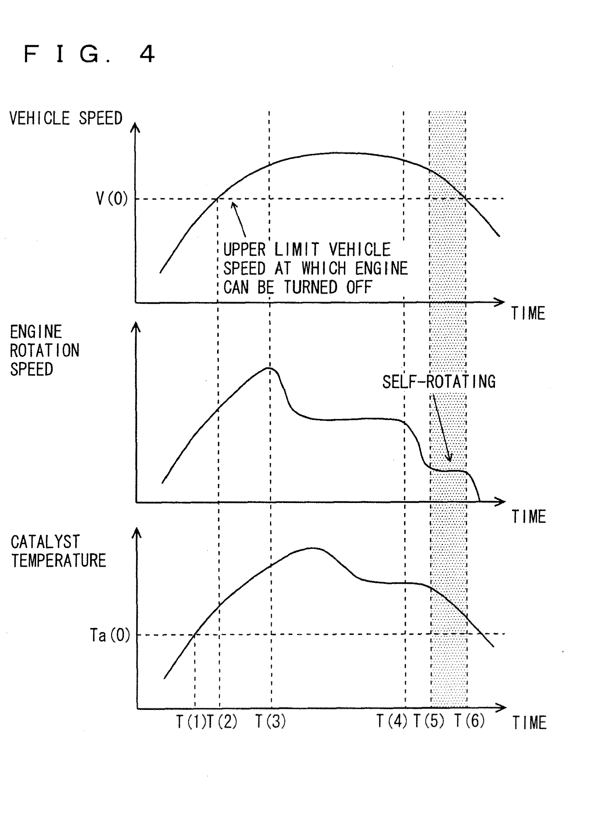

An operation of engine ECU 280 as the control device for the vehicle in accordance with the present embodiment based on the structure and the flowchart as described above will be described with reference to Fig. 4.

For example, a case is assumed where engine 120 is started, for example, by the driver depressing the accelerator pedal during traveling by motor 140B. In this case, an engine rotation speed increases in accordance with the amount of depression of the accelerator pedal. As the engine rotation speed increases, a vehicle speed increases. An increase in the engine rotation speed also causes an increase in the temperature of three-way catalytic converter 124B.

At a time T(1), the temperature of three-way catalytic converter 124B becomes equal to or higher than a predetermined temperature Ta(0) at which NOx can be reduced. At a time T(2), the speed of the vehicle exceeds a predetermined speed V(0).
Therefore, stopping of engine 120 is suppressed.

If the driver reduces pressure on the accelerator pedal or the vehicle speed reaches a speed corresponding to the amount of depression, at a time T(3), the engine rotation speed starts decreasing. Due to a decrease in the engine rotation speed, the amount of increase in the speed of the vehicle is decreased. On the other hand, the catalyst temperature increases over time, reaches a peak behind the decrease in the engine rotation speed, and thereafter starts decreasing. If the driver releases depression of the accelerator pedal or the like, the rotation speed of engine 120 is further decreased at a time T(4) and afterward.

At a time T(5), if the vehicle is in a state where depression of the accelerator pedal is released, the vehicle does not require a drive force. Since the speed of the vehicle is higher than the predetermined speed V(0) on this occasion, stopping of engine 120 is suppressed. Therefore, engine 120 is in the state of self-rotation in which it continues operating without transmitting the motive power to the outside (YES in S100).

If the temperature of three-way catalytic converter 124B is equal to or higher than the predetermined temperature Ta(0) (YES in S102), an occluded amount of NOx is estimated (S 104). If the estimated occluded amount of NOx is equal to or more than a predetermined amount (YES in S106), reduction treatment is performed (S108). When reduction treatment is performed, the fuel injection amount is increased such that the air-fuel ratio of engine 120 is temporarily on a rich side, and thus NOx occluded in three-way catalytic converter 124B reacts with the fuel, and NOx is purified.

NOx reduction treatment is performed in a period from time T(5) to a time T(6). If the speed of the vehicle becomes lower than the predetermined speed V(0) at time T(6), the speed of the vehicle enters a vehicle speed region in which stopping of engine 120 is allowed. Accordingly, a process of stopping engine 120 is performed, and thus reduction treatment is stopped. Alternatively, reduction treatment is also stopped if the temperature of three-way catalytic converter 124B becomes lower than the predetermined temperature.

In this manner, NOx reduction treatment is performed when three-way catalytic converter 124B has a reducing atmosphere and the exhaust gas has an appropriate flow rate. Therefore, a large amount of NOx is purified.

As has been described above, according to the control device for the vehicle in accordance with the present embodiment, if the three-way catalytic converter is in an activated state having a temperature that is equal to or higher than the predetermined temperature Ta(0) at which occluded NOx can be reduced, and the rotation speed and the load of the engine are a rotation speed and a load within the self-rotation speed region of the engine, the three-way catalytic converter has a reducing atmosphere, and the flowing exhaust gas has a flow rate appropriate for reducing NOx. Therefore, a large amount of NOx can be purified by performing reduction treatment of NOx. Consequently, a control device and a control method for a vehicle that improve exhaust gas purification performance by performing reduction treatment of nitrogen oxide at a time point when an effect of purifying exhaust gas appropriately functions in an internal combustion engine can be provided.

It is to be noted that it is sufficient in the present invention to perform NOx reduction treatment if at least the conditions (1) and (2) described above are satisfied. A region indicated by diagonal lines in Fig. 4 shows an example in which the conditions (1) and (2) are satisfied, and reduction treatment to be performed white engine 120 is self-rotating is not particularly limited to be performed in the region indicated by diagonal lines in Fig. 4.

In particular, unlike a vehicle having an engine only as a drive source, a hybrid vehicle of a type as described above may travel in a high vehicle speed region with an engine being in the state of self-rotation. In such a case, the engine has operation history such that the vehicle was in an accelerated state before entering the high vehicle speed region, or the engine was in a high-load steady state. Therefore, the catalyst temperature is high and further the amount of air during self-rotation is small, and thus a reducing atmosphere can be formed with a small amount of a reducing agent. That is, reduction treatment of nitrogen oxide can be performed at a time point when an effect of purifying exhaust gas appropriately functions in the engine.

### <Second Embodiment>

Hereinafter, a control device for a vehicle in accordance with a second embodiment will be described. When compared with the configuration of the vehicle equipped with the control device for the vehicle in accordance with the first embodiment described above, the control device for the vehicle in accordance with the present embodiment is different in that the vehicle further includes a catalyst heating device 124F. The components other than that are the same as those in the vehicle equipped with the control device for the vehicle in accordance with the first embodiment described above. They are designated by the same reference numerals. Since their functions are also the same, the detailed description thereof will not be repeated here.

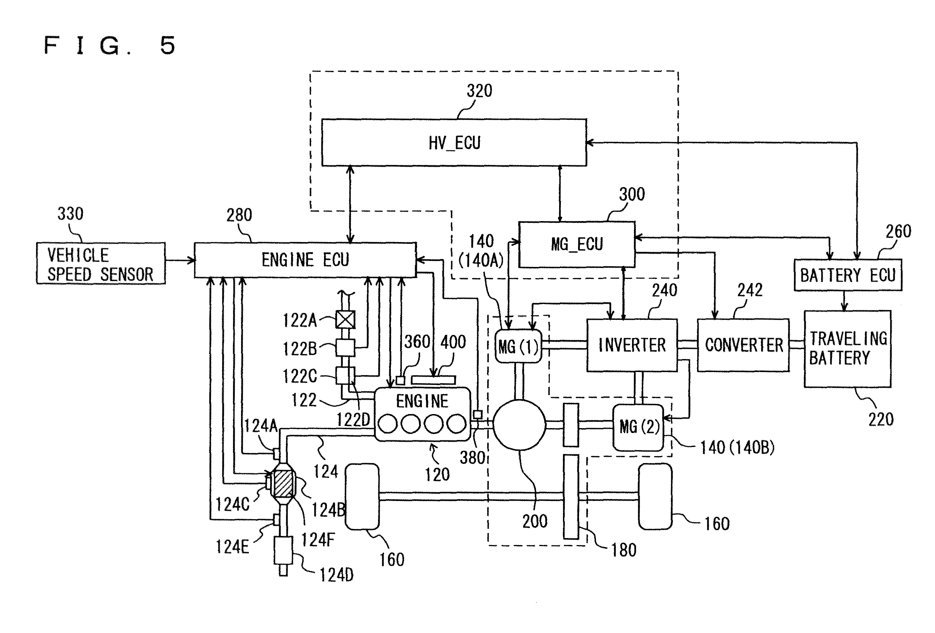

As shown in Fig. 5, in the present embodiment, engine 120 further includes catalyst heating device 124F heating three-way catalytic converter 124B. Catalyst heating device 124F increases the temperature of three-way catalytic converter 124B by performing heating treatment based on a control signal from engine ECU 280. Although catalyst heating device 124F will be described taking an electric heater as an example in the present embodiment, catalyst heating device 124F is sufficient as long as it can heat three-way catalytic converter 124B, and is not particularly limited to an electric heater.

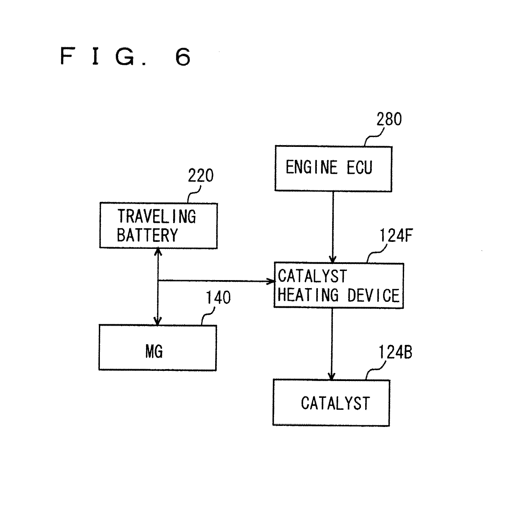

Further, as shown in Fig. 6, catalyst heating device 124F heats three-way catalytic converter 124B using electric power generated in MG 140 (generator 140A or motor 140B) during regenerative control.

For example, catalyst heating device 124F is electrically connected to a midpoint in a power supply line connecting MG 140 and traveling battery 220, via a converter converting alternating current power into direct current power and a relay (both not shown). Engine ECU 280 turns on the relay at prescribed timing during regenerative control, and thereby the generated electric power is supplied to catalyst heating device 124F.

In the present embodiment, engine ECU 280 is characterized by controlling engine 120, if the condition (2) that the temperature of three-way catalytic converter 124B is equal to or higher than a predetermined temperature Ta(0) is not satisfied, such that the temperature of three-way catalytic converter 124B is increased.

Specifically, if the condition (2) that the temperature of three-way catalytic converter 124B is equal to or higher than the predetermined temperature Ta(0) is not satisfied, engine ECU 280 controls catalyst heating device 124F such that the temperature of three-way catalytic converter 124B becomes equal to or higher than the predetermined temperature Ta(0).

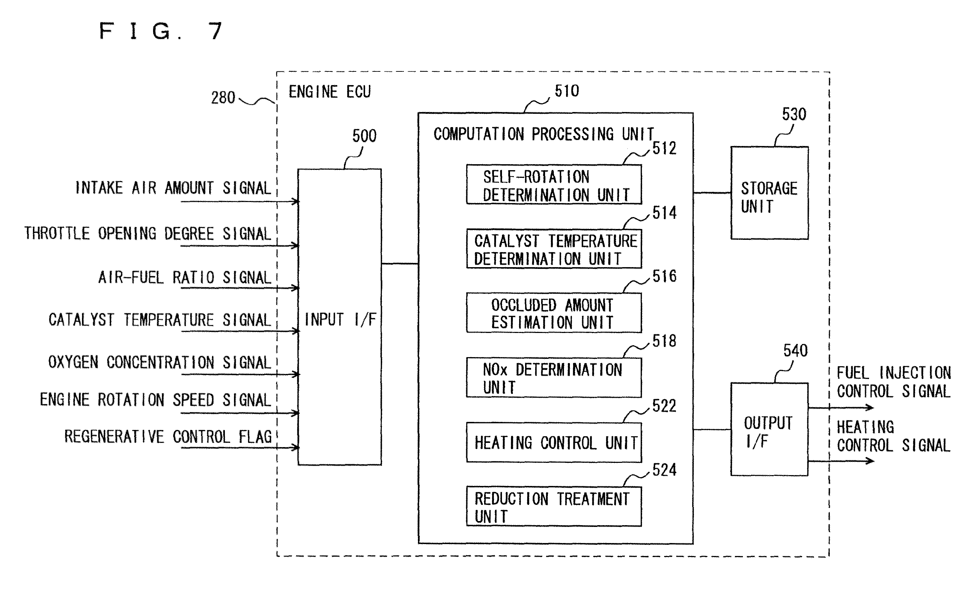

Fig. 7 shows a functional block diagram of engine ECU 280 as the control device for the vehicle in accordance with the present embodiment. In the functional block diagram in Fig. 7, computation processing unit 510 is different in that it further includes a heating control unit 522 and a reduction treatment unit 524, instead of reduction treatment unit 520 in Fig. 2. The components other than those are the same as those in Fig. 2, unless otherwise specified. Therefore, the detailed description thereof will not be repeated.

Input I/F 500 further receives a flag indicating whether or not regenerative control is being performed on motor 140B (hereinafter referred to as a regenerative control flag) from HV_ECU 320, and sends the flag to computation processing unit 510. For example, if the input flag is on, it indicates that regenerative control is being performed. HV_ECU 320 determines whether nor not regenerative control is being performed on motor 140B based on control states of generator 140A and motor 140B, and sends the regenerative control flag to engine ECU 280.

If only the condition (2) among the condition (1) that engine 120 is self-rotating, the condition (2) that the catalyst temperature is equal to or higher than a predetermined temperature Ta(0), the condition (3) that the estimated occluded amount of NOx is equal to or more than a predetermined amount, and a condition (4) that regenerative control is being performed on motor 140B is not satisfied, heating control unit 522 generates a heating control signal to turn on the relay for catalyst heating device 124F, and sends the generated heating control signal to catalyst heating device 124F via output I/F 540.

Reduction treatment unit 524 performs NOx reduction treatment if the condition (1) to the condition (4) are all satisfied. Specifically, reduction treatment unit 524 controls fuel injection device 130 such that the air-fuel ratio of engine 120 is temporarily on a rich side until a predetermined period elapses. If the conditions (1) to (4) are all satisfied, reduction treatment unit 524 generates a fuel injection control signal such that the air-fuel ratio is temporarily on a rich side, and sends the signal to fuel injection device 130 via output I/F 540.

Reduction treatment unit 524 may perform NOx reduction treatment if the self-rotation determination flag, the temperature determination flag, the NOx determination flag, and the regenerative control flag are all on.

Although the present embodiment describes a case where all of sell-rotation determination unlit 512, temperature determination unit 514, occluded amount estimation unit 516, NOx determination unit 518, heating control unit 522, and reduction treatment unit 524 function as software implemented by the CPU (Central Processing Unit) as computation processing unit 510 executing a program stored in storage unit 530, they may be configured to be implemented by hardware. Such a program is recorded in a storage medium and mounted in the vehicle.

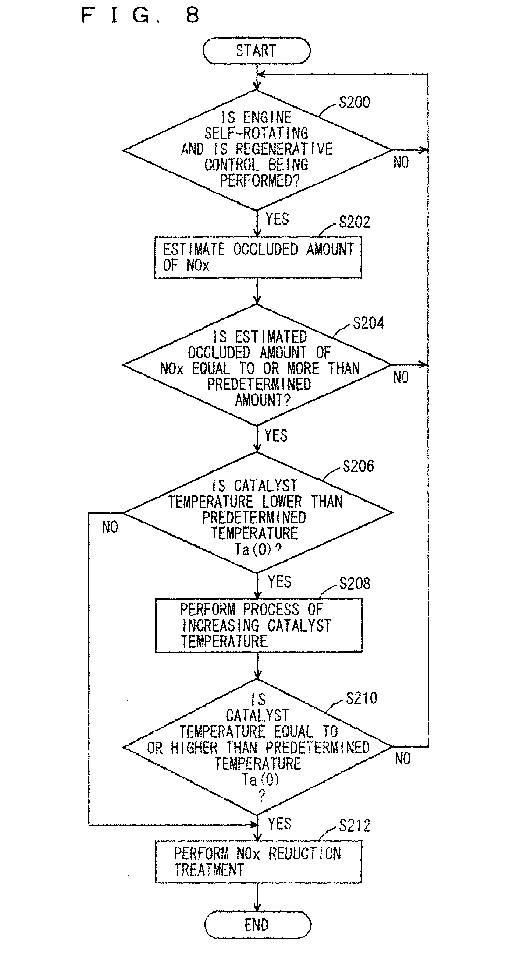

Hereinafter, a control structure of a program executed in engine ECU 280 as the control device for the vehicle in accordance with the present embodiment will be described with reference to Fig. 8.

In step S200, engine ECU 280 determines whether or not engine 120 is self-rotating and regenerative control is being performed. If engine 120 is self-rotating and regenerative control is being performed (YES in S200), the process goes to S202. Otherwise (NO in S200), the process returns to S200.

In S202, engine ECU 280 estimates an occluded amount of NOx in three-way catalytic converter 124B. In S204, engine ECU 280 determines whether or not the estimated occluded amount of NOx is equal to or more than a predetermined amount. If the estimated occluded amount of NOx is equal to or more than the predetermined amount (YES in S204), the process goes to S206. Otherwise (NO in S204), the process returns to S200.

In S206, engine ECU 280 determines whether or not the catalyst temperature is lower than a predetermined temperature Ta(0). If the catalyst temperature is lower than the predetermined temperature Ta(0) (YES in S206), the process goes to S208. Otherwise (NO in S206), the process goes to S212.

In S208, engine ECU 280 turns on catalyst heating device 124F to perform a process of increasing the temperature of three-way catalytic converter 124B. For example, after turning on catalyst heating device 124F, engine ECU 280 may turn off catalyst heating device 124F after a predetermined time elapses, or at a time point when the catalyst temperature becomes equal to or higher than the predetermined temperature Ta(0).

In S210, engine ECU 280 determines whether or not the catalyst temperature is equal to or higher than the predetermined temperature Ta(0). If the catalyst temperature is equal to or higher than the predetermined temperature Ta(0) (YES in S210), the process goes to S212. Otherwise (NO in S210), the process returns to S200.

An operation of engine ECU 280 as the control device for the vehicle in accordance with the embodiment based on the structure and the flowchart as described above will be described.

For example, a case is assumed where engine 120 is started, for example, by the driver depressing the accelerator pedal during traveling by motor 140B. In this case, an engine rotation speed increases in accordance with the amount of depression of the accelerator pedal. As the engine rotation speed increases, a vehicle speed increases.

If the driver reduces pressure on the accelerator pedal at a time point when the vehicle speed enters a vehicle speed region that exceeds a predetermined speed V(0), the engine rotation speed starts decreasing. Further, as the driver reduces pressure on the accelerator pedal, regenerative control is performed on motor 140B. Then, if the vehicle speed is equal to or higher than the predetermined speed V(0) and depression of the accelerator pedal is released, stopping of engine 120 is suppressed, and engine 120 is in the state of self-rotation (YES in S200).

On this occasion, if an occluded amount of NOx in three-way catalytic converter 124B is estimated (S202), and the estimated occluded amount of NOx is equal to or more than a predetermined amount (YES in S204), it is determined whether or not the catalyst temperature is lower than a predetermined temperature Ta(0) (S206). If the catalyst temperature is lower than the predetermined temperature Ta(0) (YES in S206), a process of increasing the catalyst temperature is performed (S208). That is, catalyst heating device 124F is turned on, and the temperature of three-way catalytic converter 124B is increased by the heat from the heater.

Then, if the temperature of three-way catalytic converter 124B becomes equal to or higher than the predetermined temperature Ta(0) (YES in S210), reduction treatment is performed (S212). When reduction treatment is performed, the fuel injection amount is increased such that the air-fuel ratio of engine 120 is temporarily on a rich side, and thus NOx occluded in three-way catalytic converter 124B reacts with the fuel and is purified. In this manner, NOx reduction treatment is performed when three-way catalytic converter 124B has a reducing atmosphere and the exhaust gas has an appropriate flow rate. Therefore, a large amount of NOx is purified.

It is to be noted NOx reduction treatment is performed until the vehicle speed becomes lower than the predetermined speed V(0), and is stopped when the process of stopping engine 120 is performed after the vehicle speed becomes lower than the predetermined speed V(0).

As has been described above, according to the control device for the vehicle in accordance with the present embodiment, if the catalyst temperature is lower than the predetermined temperature Ta(0) at which NOx can be reduced in a rotation speed region of the engine in which the exhaust gas has a flow rate appropriate for purifying NOx, a reducing atmosphere can be produced by increasing the temperature of the three-way catalytic converter using a catalyst heating device, in addition to the effect exhibited by the control device for the vehicle in accordance with the first embodiment described above. Therefore, a large amount of NOx can be purified.

It has been described in the present embodiment that, if only the condition (2) among the conditions (1) to (3) described above is not satisfied but the condition (4) is satisfied as an additional condition, the catalyst temperature is set to be equal to or higher than the predetermined temperature Ta(0) by heating the three-way catalytic converter using the catalyst heating device. However, for example, if only the condition (2) among the conditions (1) to (3) described above is not satisfied, an output (load) of the engine or the temperature of the exhaust gas may be increased such that the catalyst temperature becomes equal to or higher than the predetermined temperature Ta(0). For example, the output (load) of the engine may be increased by changing ignition timing or increasing the fuel injection amount. An increase in the output of the engine causes an increase in the amount of heat generated in the engine, resulting in an increase in the temperature of the exhaust gas. As a result of a temperature increase in the temperature of the exhaust gas, the catalyst temperature can be increased. Also in such a manner, the three-way catalytic converter can have a reducing atmosphere, and a large amount of NOx can be purified.

### <Third Embodiment>

Hereinafter, a control device for a vehicle in accordance with a third embodiment will be described. When compared with the configuration of the vehicle equipped with the control device for the vehicle in accordance with the first embodiment described above, a vehicle equipped with the control device for the vehicle in accordance with the present embodiment is different in that engine 120 is a diesel and different constituting items are in engine 120. The components other than those are the same as those in the vehicle equipped with the control device for the vehicle in accordance with the first embodiment described above. They are designated by the same reference numerals. Since their functions are also the same, the detailed description thereof will not be repeated here.

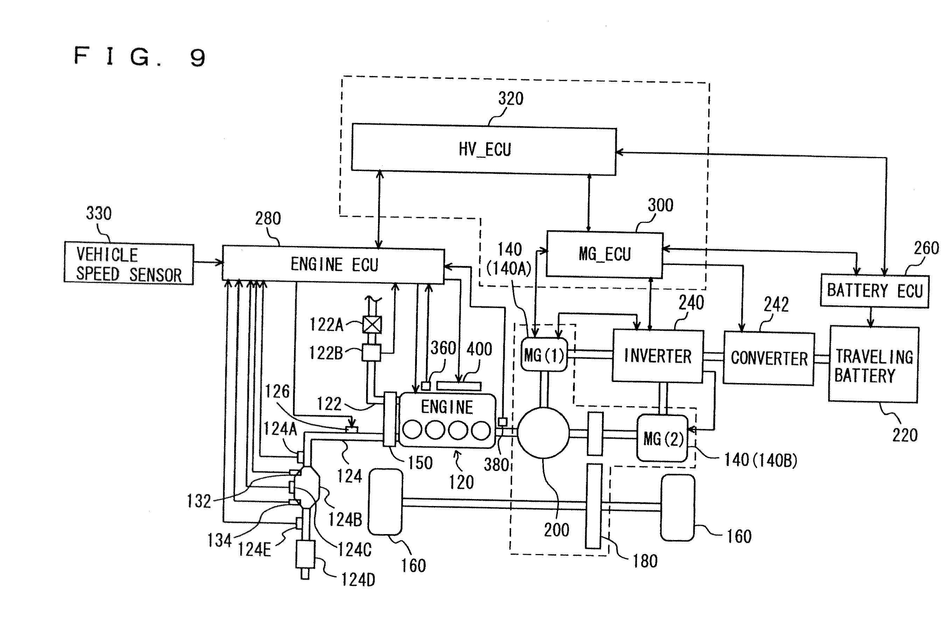

As shown in Fig. 9, intake path 122 of engine 120 is provided with air cleaner 122A and air flow meter 122B. Intake path 122 may be provided with a separate intake air throttle mechanism for adjusting the amount of air to be taken into engine 120.

Exhaust path 124 of engine 120 is provided with a DPNR (Diesel Particulate-NOx Reduction system) catalyst 124G, air-fuel ratio sensor 124A detecting an air-fuel ratio in exhaust gas to be introduced into DPNR catalyst 124G, catalyst temperature sensor 124C detecting a temperature of DPNR catalyst 124G, silencer 124D, and oxygen sensor 124E detecting an oxygen concentration in the exhaust gas exhausted from DPNR catalyst 124G.

Exhaust path 124 of engine 120 is further provided with a reducing agent addition device 126 adding a reducing agent into the exhaust path, on a side upstream of DPNR catalyst 124G (on a side close to the engine body).

Reducing agent addition device 126 adds a reducing agent into exhaust path 124 at prescribed timing based on a control signal from engine ECU 280. The added reducing agent reacts with NOx in DPNR catalyst 124G, and thereby NOx is purified. Although it is described in the present embodiment that fuel for engine 120 (i.e., light oil) is used as a reducing agent, the reducing agent may be, for example, kerosene or an aqueous urea solution.

Further, a pressure sensor (1) 132 is provided on the side upstream of DPNR catalyst 124G, and a pressure sensor (2) 134 is provided on a side downstream of DPNR catalyst 124G.

Pressure sensor (1) 132 detects a pressure on the side upstream of DPNR catalyst 124G. Pressure sensor (1) 132 sends a signal indicating the detected pressure to engine ECU 280. Pressure sensor (2) 134 detects a pressure on the side downstream of DPNR catalyst 124G. Pressure sensor (2) 134 sends a signal indicating the detected pressure to engine ECU 280.

DPNR catalyst 124G has an NOx occluding catalyst purifying NOx and a filter structure trapping PM (Particulate Matter). DPNR catalyst 124G simultaneously reduces PM and NOx by oxidizing POM and reducing NOx.

Instead of DPNR catalyst 124G, a filter trapping PM in the exhaust gas (DPF (Diesel Particulate Filter)) and an NOx occluding/reducing catalyst may be provided separately.

A turbocharger 150 is provided between intake path 122 and exhaust path 124. Turbocharger 150 is a supercharger that performs supercharging when a turbine provided in exhaust path 124 is driven by the exhaust gas exhausted from engine 120 and then a compressor in intake path 122 coupled to the turbine is driven. Any known supercharger may be used as a turbocharger, and the detailed description thereof will not be provided.

In the present embodiment, engine ECU 280 computes a degree of clogging of a filter in DPNR catalyst 124G based on the pressures detected by pressure sensor (1) 132 and pressure sensor (2) 134. Specifically, engine ECU 280 determines that, the smaller a pressure difference between the pressure detected by pressure sensor (1) 132 and the pressure detected by pressure sensor (2) 134 is, the lower the degree of clogging of the filter is, and the greater the pressure difference is, the higher the degree of clogging of the filter is. Based on the pressure difference and the degree of clogging of the filter, engine ECU 280 computes a quantified degree of clogging of the filter using a map or the like. Further, engine ECU 280 decides a rotation speed and a load at which the exhaust gas has a flow rate suitable for purifying purifying NOx during self-operation of engine 120, in accordance with the computed degree of clogging of the filter. Based on the decided rotation speed and load, engine ECU 280 controls engine 120. If the conditions (1) to (3) are satisfied, engine ECU 280 performs reduction treatment. In the present embodiment, engine ECU 280 is characterized by operating as described above.

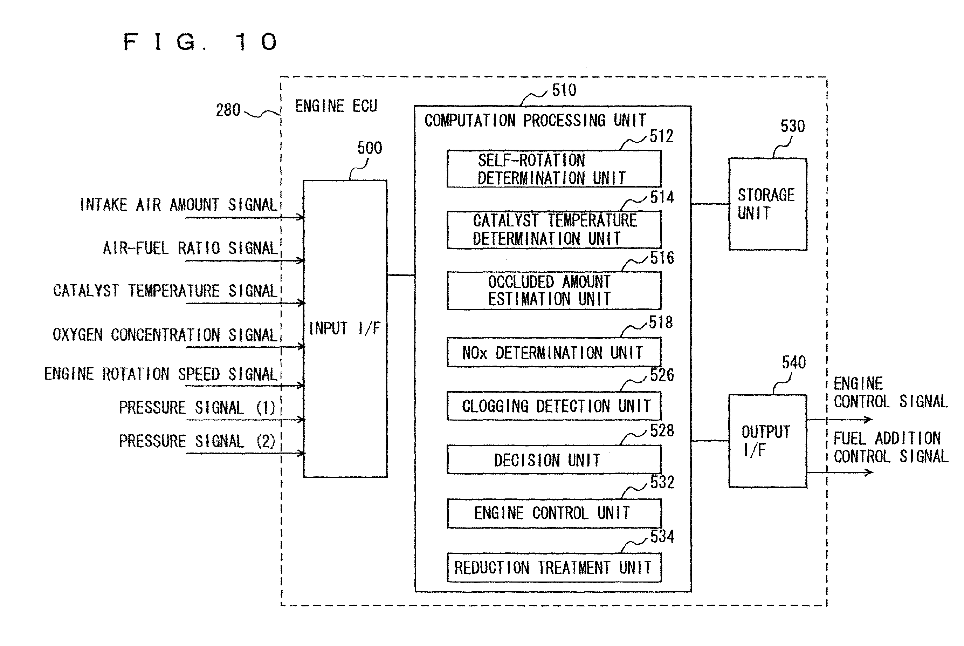

Fig. 10 shows a functional block diagram of engine ECU 280 as the control device for the vehicle in accordance with the present embodiment. In the functional block diagram in Fig. 10, computation processing unit 510 is different in that it further includes a clogging detection unit 526, a decision unit 528, an engine control unit 532, and a reduction treatment unit 534, instead of reduction treatment unit 520 in Fig. 2. The components other than those are the same as those in Fig. 2, unless otherwise specified. Therefore, the detailed description thereof will not be repeated.

Input I/F 500 further receives a pressure signal (1) from pressure sensor (1) 132 and a pressure signal (2) from pressure sensor (2) 134, and sends the signals to engine ECU 280.

Clogging detection unit 526 detects the degree of clogging of the filter based on the pressure difference computed from the received pressure signal (1) and pressure signal (2).

Decision unit 528 decides the rotation speed and the load of engine 120 at which the exhaust gas has a flow rate suitable for purifying NOx, based on the detected degree of clogging of the filter. Decision unit 528 decides the rotation speed and the load with respect to the degree of clogging, for example using a map adapted beforehand through experiments and the like, or other techniques.

Engine control unit 532 controls engine 120 to obtain the decided rotation speed and load of engine 120.

Reduction treatment unit 534 performs NOx reduction treatment if the condition (1) that engine 120 is self-rotating, the condition (2) that the catalyst temperature is equal to or higher than a predetermined temperature Ta(0), and the condition (3) that the estimated occluded amount of NOx is equal to or more than a predetermined amount are all satisfied.

Specifically, reduction treatment unit 524 generates a fuel addition control signal to add the fuel into exhaust path 124 on the side upstream of DPNR catalyst 124G for a predetermined period or in a predetermined amount, and sends the signal to reducing agent addition device 126 via output I/F 540.

Reduction treatment unit 534 may perform NOx reduction treatment if the self-rotation determination flag, the temperature determination flag, and the NOx determination flag are all on.

Although the present embodiment describes a case where all of self-rotation determination unit 512, temperature determination unit 514, occluded amount estimation unit 516, NOx determination unit 518, clogging detection unit 526, decision unit 528, engine control unit 532, and reduction treatment unit 534 function as software implemented by the CPU (Central Processing Unit) as computation processing unit 510 executing a program stored in storage unit 530, they may be configured to be implemented by hardware. Such a program is recorded in a storage medium and mounted in the vehicle.

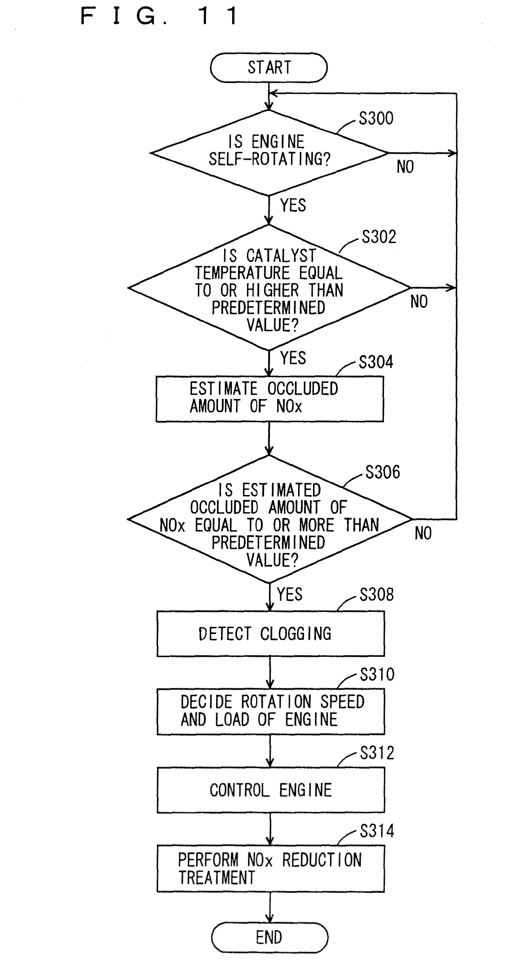

Hereinafter, a control structure of a program executed in engine ECU 280 as the control device for the vehicle in accordance with the present embodiment will be described with reference to Fig. 11.

In step S300, engine ECU 280 determines whether or not engine 120 is self-rotating. If engine 120 is self-rotating (YES in S300), the process goes to S302. Otherwise (NO in S300), the process returns to S300.

In S302, engine ECU 280 determines whether or not the temperature of DPNR catalyst 124G is equal to or higher than a predetermined temperature Ta(0). If the temperature of DPNR catalyst 124G is equal to or higher than the predetermined temperature Ta(O) (YES in S302), the process goes to S304. Otherwise (NO in S302), the process returns to S300.

In S304, engine ECU 280 estimates an occluded amount of NOx in DPNR catalyst 124G. In S306, engine ECU 280 determines whether or not the estimated occluded amount of NOx is equal to or more than a predetermined amount. If the estimated occluded amount of NOx is equal to or more than the predetermined amount (YES in S306), the process goes to S308. Otherwise (NO in S306), the process returns to S300.

In S308, engine ECU 280 detects the degree of clogging of the filter based on the difference in the pressures detected by pressure sensor (1) 132 and pressure sensor (2) 134.

In S310, engine ECU 280 decides a rotation speed and a load of engine 120 based on the detected degree of clogging of the filter. In S312, engine ECU 280 controls engine 120 to obtain the decided rotation speed and load. In S314, engine ECU 280 performs reduction treatment of NOx.

An operation of engine ECU 280 as the control device for the vehicle in accordance with the present embodiment based on the structure and the flowchart as described above will be described.

For example, a case is assumed where engine 120 is started, for example, by the driver depressing the accelerator pedal during traveling by motor 140B. In this case, an engine rotation speed increases in accordance with the amount of depression of the accelerator pedal. As the engine rotation speed increases, a vehicle speed increases.

If the driver reduces pressure on the accelerator pedal at a time point when the vehicle speed enters a vehicle speed region that exceeds a predetermined speed V(0), the engine rotation speed starts decreasing. If the vehicle speed is equal to or higher than the predetermined speed V(0) and depression of the accelerator pedal is released, stopping of engine 120 is suppressed, and engine 120 is in the state of self-rotation (YES in S300).

On this occasion, if the temperature of DPNR catalyst 124G is equal to or higher than a predetermined temperature Ta(0) (YES in S302), an occluded amount of NOx is estimated (S304). If the estimated occluded amount of NOx is equal to or more than a predetermined amount (YES in S306), the degree of clogging is detected based on the difference between the pressure detected by pressure sensor (1) 132 and the pressure detected by pressure sensor (2) 134 (S308).

A rotation speed and a load of engine 120 are decided based on the detected degree of clogging (S310). After engine 120 is controlled based on the decided rotation speed and load (S312), NOx reduction treatment is performed (S314). When NOx reduction treatment is performed, NOx occluded in DPNR catalyst 124G is purified.

It is to be noted that NOx reduction treatment is performed until the vehicle speed becomes lower than the predetermined speed V(0), and is stopped when the process of stopping engine 120 is performed after the vehicle speed becomes lower than the predetermined speed V(0).

As has been described above, according to the control device for the vehicle in accordance with the present embodiment, the flow rate of the exhaust gas can be set to be suitable for purifying NOx by controlling the engine to obtain a rotation speed and a load decided in accordance with the degree of clogging of a filter portion in the DPNR catalyst, in addition to the effect exhibited by the control device for the vehicle in accordance with the first embodiment described above. Therefore, the DPNR catalyst can have reducing atmosphere. By performing reduction treatment in such a state, a large amount of NOx can be purified.

Further, excess or deficiency between power generated by the engine and power required by the vehicle at the time of adjusting a load can be absorbed by battery charging/discharging.

It should be understood that the embodiments disclosed herein are illustrative and non-restrictive in every respect. The scope of the present invention is defined by the scope of the claims, rather than the description above, and is intended to include any modifications within the scope and meaning equivalent to the scope of the claims.

### DESCRIPTION OF THE REFERENCE SIGNS

120: engine, 122: intake path, 122A: air cleaner, 122B: air flow meter, 122C: electronic throttle, 122D: throttle position sensor, 124: exhaust path, 124A: air-fuel ratio sensor, 124B: three-way catalytic converter, 124C: catalyst temperature sensor, 124D: silencer, 124E: oxygen sensor, 124F: catalyst heating device, 124G: DPNR catalyst, 126: reducing agent addition device, 130: fuel injection device, 140: motor generator, 140A: generator, 140B: motor, 150: turbocharger, 160: drive wheels, 180: reduction gear, 200: motive power split mechanism, 220: traveling battery, 240: inverter, 242: converter, 260: battery ECU, 280: engine ECU, 330: vehicle speed sensor, 360: water temperature detection sensor, 380: crank position sensor, 500: input I/F, 510: computation processing unit, 512: self-rotation determination unit, 514: temperature determination unit, 516: occluded amount estimation unit, 518: NOx determination unit, 520, 524, 534: reduction treatment unit, 522: heating control unit, 526: clogging detection unit, 528: decision unit, 530: storage unit, 532: engine control unit, 540: output I/F.

## Claims

1. A control device for a vehicle having an internal combustion engine (120) and a rotating electric machine (140) as drive sources, said internal combustion engine (120) including an exhaust path (124) through which exhaust gas produced by combusting fuel flows, and a catalyst (124B) provided at a midpoint in said exhaust path (124) for occluding nitrogen oxide, comprising:
a temperature detection unit (124C) detecting a temperature of said catalyst (124B);
a rotation speed detection unit (380) detecting a rotation speed of said internal combustion engine (120);
a load detection unit (122B, 122D) detecting a load of said internal combustion engine (120); and
a reduction treatment unit (280) performing reduction treatment of the nitrogen oxide in said catalyst (124B) if a first condition that said detected rotation speed and load are a rotation speed and a load within a self-rotation speed region of said internal combustion engine (120), and a second condition that said detected temperature of said catalyst (124B) is equal to or higher than a predetermined temperature at which the nitrogen oxide occluded by said catalyst (124B) can be reduced are satisfied.

2. The control device for a vehicle according to claim 1, further comprising a first internal combustion engine control unit (280) controlling said internal combustion engine (120), if said second condition is not satisfied, to increase an output of said internal combustion engine (120) or increase a temperature of said exhaust gas such that the temperature of said catalyst (124B) becomes equal to or higher than said predetermined temperature.

3. The control device for a a vehicle according to claim 1, wherein
said internal combustion engine (120) further includes a catalyst heating device (124F) increasing the temperature of said catalyst (124B), and
said control device further comprises a heating control unit (522) controlling said catalyst heating device (124F), if said second condition is not satisfied, such that
the temperature of said catalyst (124B) becomes equal to or higher than said predetermined temperature.

4. The control device for a vehicle according to claim 1, wherein
said catalyst (124B) has a filter trapping fine particles in said exhaust gas, and said control device further comprises:
a clogging detection unit (526) detecting a degree of clogging of said filter;
a decision unit (528) deciding a rotation speed and a load of said internal combustion engine (120) at which the exhaust gas has a flow rate suitable for purifying said nitrogen oxide, in accordance with said detected degree of clogging; and
a second internal combustion engine control unit (532) controlling said internal combustion engine (120) based on said decided rotation speed and load.

5. The control device for a vehicle according to claim 1, further comprising an occluded amount detection unit (516) detecting an occluded amount of the nitrogen oxide occluded by said catalyst (124B), wherein
said reduction treatment unit (280) performs the reduction treatment of the nitrogen oxide in said catalyst (124B) if a third condition that said detected occluded amount of the nitrogen oxide is equal to or more than a predetermined amount, in addition to said first condition and said second condition, are satisfied.

6. The control device for a vehicle according to claim 1, wherein stopping of said internal combustion engine (120) is suppressed if a speed of said vehicle is equal to or higher than a predetermined speed.

7. The control device for a vehicle according to claim 1, wherein said internal combustion engine (120) is any of a lean burn gasoline engine and a diesel engine.

8. The control device for a vehicle according to any of claims 1 to 7, wherein said rotating electric machine (140) is a first electric machine (140B), said vehicle includes a second rotating electric machine (140A) generating electric power based on motive power of said internal combustion engine (120), and
a motive power split mechanism (200) transmitting motive power of at least one of said internal combustion engine (120) and said first rotating electric machine (140B) to an axle of said vehicle, and
said motive power split mechanism (200) outputs the input motive power of said internal combustion engine (120) or motive power of said first rotating electric machine (140B) after splitting the input motive power into a drive force to said axle or motive power to said second rotating electric machine (140A).

9. A control method for a vehicle having an internal combustion engine (120) and a rotating electric machine (140) as drive sources, said internal combustion engine (120) including an exhaust path (124) through which exhaust gas produced by combusting fuel flows, and a catalyst (124B) provided at a midpoint in said exhaust path (124) for occluding nitrogen oxide, comprising the steps of:
detecting a temperature of said catalyst (124B);
detecting a rotation speed of said internal combustion engine (120);
detecting a load of said internal combustion engine (120); and
performing reduction treatment of the nitrogen oxide in said catalyst (124B) if a first condition that said detected rotation speed and load are a rotation speed and a load within a self-rotation speed region of said internal combustion engine (120), and a second condition that said detected temperature of said catalyst (124B) is equal to or higher than a predetermined temperature at which the nitrogen oxide occluded by said catalyst (124B) can be reduced are satisfied.

10. The control method for a vehicle according to claim 9, further comprising the step of controlling said internal combustion engine (120), if said second condition is not satisfied, to increase an output of said internal combustion engine (120) or increase a temperature of said exhaust gas such that the temperature of said catalyst (124B) becomes equal to or higher than said predetermined temperature.

11. The control method for a vehicle according to claim 9, wherein
said internal combustion engine (120) further includes a catalyst heating device (124F) increasing the temperature of said catalyst (124B), and
said control method further comprises the step of controlling said catalyst heating device (124F), if said second condition is not satisfied, such that the temperature of said catalyst (124B) becomes equal to or higher than said predetermined temperature.

12. The control method for a vehicle according to claim 9, wherein
said catalyst (124B) has a filter trapping fine particles in said exhaust gas, and said control method further comprises the steps of:
detecting a degree of clogging of said filter;
deciding a rotation speed and a load of said internal combustion engine (120) at which the exhaust gas has a flow rate suitable for purifying said nitrogen oxide, in accordance with said detected degree of clogging; and
controlling said internal combustion engine (120) based on said decided rotation speed and load.

13. The control method for a vehicle according to claim 9, further comprising the step of detecting an occluded amount of the nitrogen oxide occluded by said catalyst (124B), wherein
said step of performing reduction treatment performs the reduction treatment of the nitrogen oxide in said catalyst (124B) if a third condition that said detected occluded amount of the nitrogen oxide is equal to or more than a predetermined amount, in addition to said first condition and said second condition, are satisfied.

14. The control method for a vehicle according to claim 9, wherein stopping of infernal combustion engine (120) is suppressed if a speed of said vehicle is equal to or higher than a predetermined speed.

15. The control method for a vehicle according to claim 9, wherein said internal combustion engine (120) is any of a lean burn gasoline engine and a diesel engine.

16. The control method for a vehicle according to any of claims 9 to 15,
wherein
said rotating electric machine (140) is a first rotating electric machine (140B), said vehicle includes a second rotating electric machine (140A) generating electric power based on motive power of said internal combustion engine (120), and
a motive power split mechanism (200) transmitting motive power of at least one of said internal combustion engine (120) and said first rotating electric machine (140B) to an axle of said vehicle, and
said motive power split mechanism (200) outputs the input motive power of said internal combustion engine (120) or motive power of said first rotating electric machine (140B) after splitting the input motive power into a drive force to said axle or motive power to said second rotating electric machine (140A).
